# EUROPEAN PATENT APPLICATION

(11) **EP 4 753 038 A1**
(43) Date of publication of application: **03.06.2026**
(21) Application number: 25213645.2
(22) Date of filing: 05.11.2025
(51) Int. Cl.: H01M 50/209, H01M 50/291

(54) **BATTERY PACK**

(30) Priority: 15.11.2024 CN 202422809709 U; 13.12.2024 WO PCT/CN2024/139065
(71) Applicant: EVE Energy Storage Co., Ltd., Wuhan Hubei 430000 (CN)
(72) Inventor: YU, Zhonghui, Wuhan, Hubei 430000 (CN); WANG, Pengyu, Wuhan, Hubei 430000 (CN); FENG, Chaojun, Wuhan, Hubei 430000 (CN); GONG, Muhong, Wuhan, Hubei 430000 (CN); PENG, Yanqiu, Wuhan, Hubei 430000 (CN); ZHU, Yuan, Wuhan, Hubei 430000 (CN)
(74) Representative: Herrero & Asociados, S.L.

(57) **Abstract**

A battery pack (1000) is provided. The battery pack (1000) includes a plurality of cells (200) and a buffer component (100). The plurality of cells (200) are arranged at intervals. The buffer component (100) is arranged between adjacent cells (200). The buffer component (100) includes a plurality of basic elements (10) that are connected together. Sidewalls of the basic element (10) are formed as N surfaces (12) and N curved surfaces (14). The N surfaces (12) and the N curved surfaces (14) are alternately connected end-to-end. The basic element (10) is provided with a through-hole (16), and the curved surfaces (14) are curved towards the through-hole (16).

## Description

### TECHNICAL FIELD

The present disclosure relates to the technical field of batteries, and in particular, to a battery pack.

### BACKGROUND

After the battery pack has been in continuous operation for a period of time, especially as the cells approach the end of their lifespan, noticeable swelling will occur in the cells.

This swelling causes the cause materials between the cells to be compressed and deformed, resulting in the width of the materials between the cells exceeding that of the cells. As a consequence, the steel straps on the battery module will be subjected to force, leading to their deformation, which alters the contact area between the steel strap and the cells, thereby affecting the restraint tightness of the steel straps on the cells, which will compromise the reliability and safety of the battery pack.

### SUMMARY

According to a first aspect, the present disclosure provides a battery pack. The battery pack includes a plurality of cells and a buffer component. The plurality of cells are arranged at intervals. The buffer component is arranged between adjacent cells. The buffer component includes a plurality of basic elements that are connected together. Sidewalls of the basic element are formed as N surfaces and N curved surfaces. The N surfaces and the N curved surfaces are alternately connected end-to-end. The basic element is provided with a through-hole, and the curved surfaces are curved towards the through-hole.

The beneficial effects provided in the present disclosure are: sidewalls of the basic element are formed as N surfaces and N curved surfaces. The N surfaces and the N curved surfaces are alternately connected end-to-end to form a closed loop. The curved surfaces are curved towards a central through-hole of the basic element. Portions of the basic element corresponding to the curved surfaces form concave structures, while portions of the basic element corresponding to the surfaces form flat structures. During use, the surface may abut against the cell. This configuration ensures that when force is transmitted through the surface during cell deformation, a sufficient contact area is maintained between the basic element and the cell, thereby effectively distributing the force to reduce localized pressure concentrations on the basic element. The pressure on the surface is then transferred to the curved surfaces, and the curved surfaces will gradually close under pressure, causing the concave spaces formed by the curved surfaces to be occupied, thereby shifting the deformation space of the buffer component to the space occupied by the curved surfaces of the basic element, so as to enable the basic element to exhibit zero or negative Poisson's ratio, thereby preventing the width of the buffer component from exceeding that of the cell. Consequently, compressive force on steel straps of the buffer component is reduced, ensuring that the steel straps maintain their restraint tightness on the cells, thereby ensuring the reliability and safety of the battery pack provided by the steel straps.

The basic element is provided with a through-hole, and when the basic element deforms under force, a portion of materials of the basic element will move toward the through-holes until completely filling the through-holes, thereby occupying the space of the through-hole to achieve zero or negative Poisson's ratio for the basic element, such that the deformation space of the buffer component will be transferred to the space occupied by the through-hole of the basic element, thereby preventing the width of the buffer component from exceeding that of the cell. Consequently, compressive force on steel straps of the buffer component is reduced, ensuring that the steel straps maintain their restraint tightness on the cells, thereby ensuring the reliability and safety of the battery pack provided by the steel straps.

### BRIEF DESCRIPTION OF THE DRAWINGS

FIG. 1 is a schematic structural diagram of a battery pack according to some embodiments of the present disclosure;
FIG. 2 is a schematic structural diagram of a basic element according to an embodiment of the present disclosure;
FIG. 3 is a schematic structural diagram of a buffer component according to an embodiment of the present disclosure;
FIG. 4 is a schematic structural diagram of a buffer component according to another embodiment of the present disclosure;
FIG. 5 is a schematic structural diagram of a buffer component according to another embodiment of the present disclosure.

### Reference numerals:

1000, battery pack; 200, cell; 100, buffer component; 10, basic element; 12, surface; 14, curved surface; 16, through-hole; 18, connection hole; 300, stress sensor.

### DETAILED DESCRIPTION

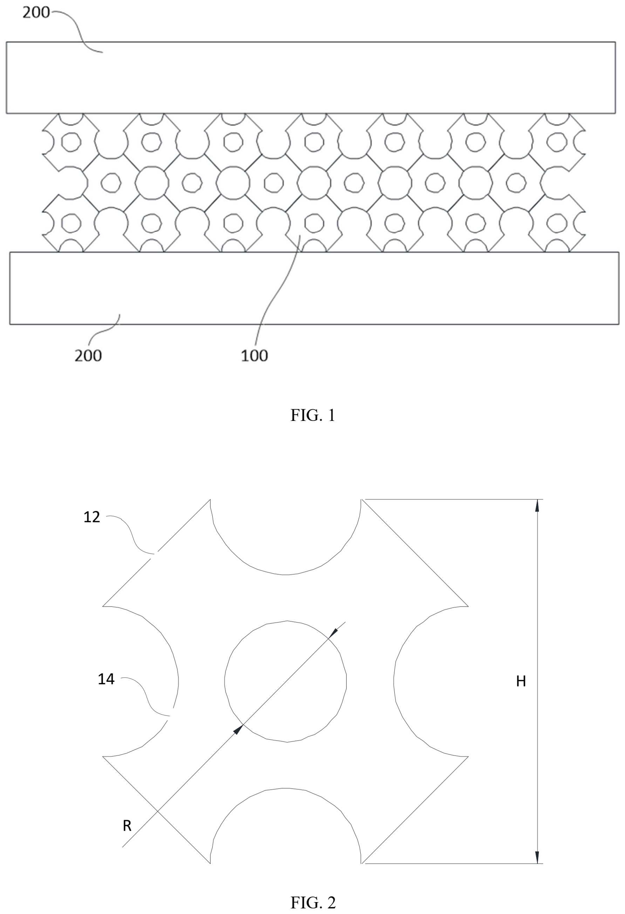

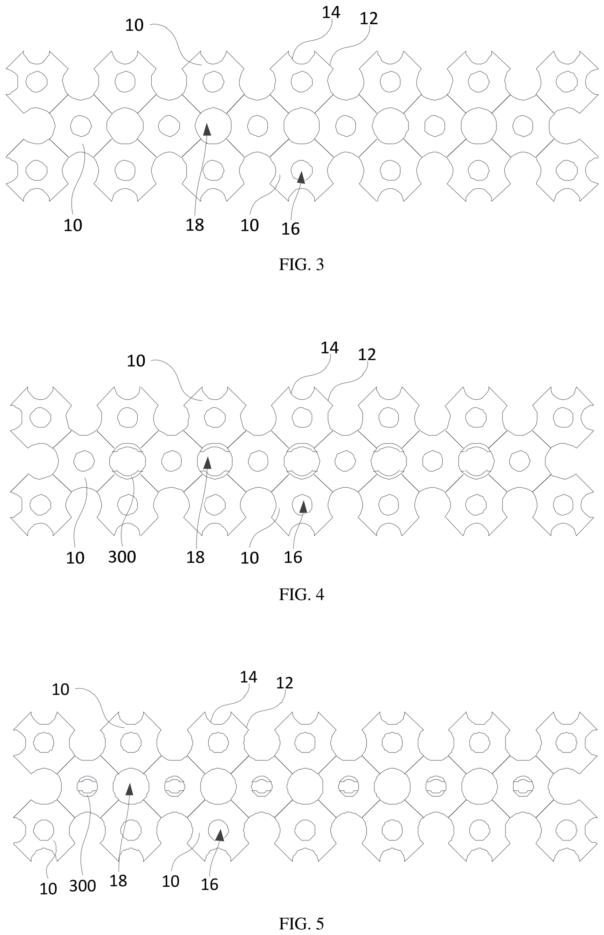

Referring to FIG. 1 to FIG. 3, FIG. 1 is a schematic structural diagram of a battery pack according to an embodiment of the present disclosure, FIG. 2 is a schematic structural diagram of a basic element 10 according to an embodiment of the present disclosure, and FIG. 3 is a schematic structural diagram of a buffer component 100 according to an embodiment of the present disclosure.

The present disclosure provides a battery pack 100. The battery pack 100 includes a plurality of cells 200 and a buffer component 100. The plurality of cells 200 are arranged at intervals, with the buffer component 100 arranged between adjacent cells 200. The buffer component 100 includes a plurality of basic elements 10 that are connected together. The plurality of basic elements 10 may be arranged along a thickness direction of the cells 200, that is, the plurality of basic elements 10 may be arranged on the largest side surfaces of the cells 200. The likelihood and magnitude of deformation of the cells 200 in this direction are the greatest, thereby providing great buffering. Alternatively, the plurality of basic elements 10 may be arranged along a width direction of the cells 200, that is, the plurality of basic elements 10 may be arranged on the smallest side surfaces of the cells 200.

Sidewalls of the basic element 10 are formed as N surfaces 12 and N curved surfaces 14. The N surfaces 12 and the N curved surfaces 14 are alternately connected end-to-end to form a closed loop. The curved surfaces 14 are curved towards a central through-hole 16 of the basic element 10. Portions of the basic element 10 corresponding to the curved surfaces 14 form concave structures, while portions of the basic element 10 corresponding to the surfaces 12 form flat structures.

During use, the surface 12 may abut against the cell 200, for example, the surface 12 may maintain abutting against the cell 200, or the cell 200 may exert a force to the basic element 10 during cell deformation to induce gradual deformation of the basic element 10, there causing the surface 12 to gradually reorient into full contact position with the cell 200 to abut against the cell 200. This configuration ensures that when force is transmitted through the surface 12 during cell deformation, a sufficient contact area is maintained between the basic element 10 and the cell 200, thereby effectively distributing the force to reduce localized pressure concentrations on the basic element 10. The pressure on the surface 12 is then transferred to the curved surfaces 14, and the curved surfaces 14 will gradually close under pressure, causing the concave spaces formed by the curved surfaces 14 to be occupied, thereby shifting the deformation space of the buffer component 100 to the space occupied by the curved surfaces 14 of the basic element 10, so as to enable the basic element 10 to exhibit zero or negative Poisson's ratio, thereby preventing the width of the buffer component 100 from exceeding that of the cell 200. Consequently, compressive force on steel straps of the buffer component 100 is reduced, ensuring that the steel straps maintain their restraint tightness on the cells 200, thereby ensuring the reliability and safety of the battery pack provided by the steel straps.

The basic element 10 is provided with a through-hole 16, which may be located at a cental position or approximate central position of the basic element 10, thereby ensuring more balanced stress distribution around the through-hole 16 and consequently more uniform deformation of the basic unit 10. Alternatively, the through-hole 16 may also be located at an eccentric position of the basic element 10. When the basic element 10 deforms under force, a portion of materials of the basic element 10 will move toward the through-holes 16 until completely filling the through-holes 16, thereby occupying the space of the through-hole 16 to achieve zero or negative Poisson's ratio for the basic element 10, such that the deformation space of the buffer component 100 will be transferred to the space occupied by the through-hole 16 of the basic element 10, thereby preventing the width of the buffer component 100 from exceeding that of the cell 200. Consequently, compressive force on steel straps of the buffer component 100 is reduced, ensuring that the steel straps maintain their restraint tightness on the cells 200, thereby ensuring the reliability and safety of the battery pack provided by the steel straps.

In an embodiment, N is an even number (such as 2, 4, 6, 8, 10, etc.), and the basic element 10 exhibits central symmetry. This configuration ensures that when the basic element 10 is arranged between the cells 200, the basic element 10 can receive forces symmetrically, thereby evenly distributing pressure onto the basic element 10, and preventing irreversible deformation of the basic element 10 caused by localized stress exceeding limits. For example, when N is equal to 2, a profile of the basic element 10 forms a quasi-regular quadrilateral; when N is equal to 4, a profile of the basic element 10 forms a quasi-regular octagon; when N is equal to 6, a profile of the basic element 10 forms a quasi-regular dodecagon.

A length of the surface 12 and a linear length of the curved surface 14 may be equal, so that the closed loop formed by the N surfaces 12 and the N curved surfaces 14 alternately connected end-to-end is a quasi-regular polygon.

Alternatively, the curved surface 14 may be arc-shape, with a curvature ranging from quarter-circle to half-circle (e.g., 1/4π, 1/2π). The arc-shaped curved surface 14 provides smooth transitions. During the deformation of the basic element 10, the basic element 10 experiences minimal resistance at the curved surface 14, thereby facilitating deformation of the basic element 10. Additionally, the arc-shaped curved surface 14 is provided with inherently elastic recovery capability, and after external force is removed, the curved surface 14 can automatically restore to its original shape through its own elasticity, enabling repeated use and improving the utilization efficiency of the basic element 10.

In an embodiment, in the thickness direction of the cell 200, a height of the basic element 10 is H. A height direction of the basic element 10 corresponds to the thickness direction of the cell 200, with 0.5 mm ≤ H ≤ 20 mm, and H may be 0.5 mm, 2 mm, 4 mm, 5 mm, 8 mm, 10 mm, 12 mm, 16 mm, 18 mm, 20 mm, etc. Within this range, the basic element 10 can can provide buffering without excessively occupying the installation space of the cells 200. When the height of the basic element 10 is larger than 20 mm, the buffering effect of the basic element 10 cannot be greatly improved, but instead excessively occupies the installation space of the cell 200. When the basic element 10 is less than 0.5 mm, the buffering effect of the basic element 10 is greatly weakened, making it unable to serve as a transition and reduce the squeezing force exerted by the cell 200 on the steel straps. In an embodiment, 5mm≤H≤10mm.

Optionally, a diameter of the through-hole 16 is R, with R≤0.25H, and R may be 0.25H, 0.2H, 0.15H, 0.1H, etc. As the size of the basic element 10 increases, the diameter of the through-hole 16 also increases. Within the above range, the through-hole 16 will not destroy the entire structural strength of the basic element 10, so that when the basic element 10 is subjected to an external force, the basic element 10 can be slowly deformed until it reaches the limit state. After the external force disappears, the basic element 10 can still return to the original shape.

Optionally, adjacent surfaces 12 of adjacent basic elements 10 mutually abut against each other, while adjacent curved surfaces 14 of adjacent basic elements 10 align to form a connection hole 18. The surface 12 is in a flat state and can smoothly transmit force to the contacting surface when subjected to force. Additionally, the surfaces 12 of adjacent basic elements 10 are in contact with each other, thereby ensuring the stability of the arrangement of the basic elements 10, preventing the basic elements 10 from becoming loose during force application.

Optionally, the present embodiment protects the arrangement as shown in FIG. 3. The interconnected basic elements 10 are connected to each other through their surfaces 12, with the surfaces 12 located at opposite ends of the buffer component 100 configured to abut against the cells 200, and the curved surfaces 14 located at opposite ends of the buffer component 100 facing toward the cells 200. In this embodiment, the buffer component 100 has at least two parts, referred to as a first part and a second part, respectively, with the first parts provided on opposite sides of the second part. The first part and the second part form a sandwich structure. The first parts are configured to abut against the cells 200, and the plurality of basic units 10 of the first part are arranged at intervals, and some of the surfaces 12 of the basic elements 10 of the first parts are configured to abut against the cells 200. The surfaces 12 of the basic elements 10 of the second part are connected with some of the surfaces 12 of the basic elements 10 of the first parts, thereby connecting the first parts and the second part into an integrated whole.

In the present embodiment, the buffer component 100 is divided into multiple parts that are interconnected through their respective surfaces 12 to form an integrated whole. When the buffer component 100 is subjected to a force, the basic elements 10 transmit the force to each other through the surfaces 12. Compared to the curved surfaces 14, the surfaces 12 can increase the contact area, , thereby improving the stability of the overall structure, so that the buffer component 100 does not become loose during use.

Referring to FIGs. 1, 4 and 5, in some embodiments, the battery pack 100 further includes a stress sensor 300 arranged within the buffer component 100. The stress sensor 300 may be a piezoelectric sensor, an electrostatic sensor, or a capacitive sensor. The basic element 10 will synchronously act on the stress sensor 300 during deformation. Even if the stress sensor 300 does not deform, it can still sense the stress, thereby collecting mechanical signals. A management unit in the battery pack 100 can acquire these mechanical signals, enabling more precise management decisions by the management unit.

Additionally, in conventional solutions where the stress sensor 300 is attached between the major surfaces of the cells 200, this arrangement alters original mechanical boundary conditions of battery modules. Under prolonged pressure, the stress sensor 300 may potentially pierce blue films coating on surfaces of the cells 200, compromising electrical safety. In contrast, in this application, the stress sensor 300 is provided within the buffer component 100 and encapsulated by the basic elements 10, this configuration enables the stress sensor 300 to obtain pressure data without direct contact with the cells 200, thereby preventing potential damage to the cell 200 from the stress sensor 300.

Optionally, as shown in FIG. 5, the stress sensor 300 may be provided within the through-hole 16. The through-hole 16 itself forms an enclosed environment, thereby providing protection for the stress sensor 300. Alternatively, as shown in FIG. 4, adjacent curved surfaces 14 of the adjacent basic elements 10 collectively form the connection hole 18, the stress sensor 300 may also be arranged within the connection hole 18, which can also provide protection for the stress sensor 300.

Optionally, multiple stress sensors 300 are provided, with every two of the multiple stress sensors 300 arranged as a group. Each group of the stress sensors 300 is symmetrically arranged along a direction perpendicular to the thickness direction of the cell 200. Each stress sensor 300 can obtain mechanical signals, and by grouping every two stress sensors 300 together, the signal strength at specific locations can be amplified, achieving the purpose of localized signal enhancement.

## Claims

1. A battery pack (1000), comprising:
a plurality of cells (200) arranged at intervals;
a buffer component (100) arranged between adjacent cells (200), wherein the buffer component (100) comprises a plurality of basic elements (10) that are connected together; sidewalls of the basic element (10) are formed as N surfaces (12) and N curved surfaces (14); wherein the N surfaces (12) and the N curved surfaces (14) are alternately connected end-to-end; the basic element (10) is provided with a through-hole (16), and the curved surfaces (14) are curved towards the through-hole (16).

2. The battery pack (1000) according to claim 1, wherein adjacent surfaces (12) of adjacent basic elements (10) mutually abut against each other, while adjacent curved surfaces (14) of adjacent basic elements (10) align to form a connection hole (18).

3. The battery pack (1000) according to claim 1, wherein the curved surface (14) is arc-shaped.

4. The battery pack (1000) according to claim 3, wherein a curvature of the curved surface (14) ranges from quarter-circle to half-circle.

5. The battery pack (1000) according to claim 1, wherein N is an even number, and the basic element (10) exhibits central symmetry.

6. The battery pack (1000) according to any one of claims 1 to 5, wherein a height of the basic element (10) in a thickness direction of the cell (200) is H, wherein 0.5 mm≤H≤20 mm.

7. The battery pack (1000) according to claim 6, wherein 5mm≤H≤10mm.

8. The battery pack (1000) according to claim 6, wherein a diameter of the through-hole (16) is R, wherein R≤0.25H.

9. The battery pack (1000) according to claim 5, wherein the curved surfaces (14) of the basic elements (10) located at opposite ends of the buffer component (100) face toward the cells (200).

10. The battery pack (1000) according to claim 1, wherein the battery pack (1000) further comprises a stress sensor (300) arranged within the buffer component (100).

11. The battery pack (1000) according to claim 10, wherein the stress sensor (300) is a piezoelectric sensor, an electrostatic sensor, or a capacitive sensor.

12. The battery pack (1000) according to claim 10, wherein the stress sensor (300) is arranged within the through-hole (16); or
wherein adjacent curved surfaces (14) of adjacent basic elements (10) collectively form a connection hole (18), and the stress sensor (300) is arranged within the connection hole (18).

13. The battery pack (1000) according to claim 10, wherein there are a plurality of the stress sensors (300), wherein every two of the plurality of the stress sensors (300) are arranged as a group, and each group of the stress sensors (300) is symmetrically arranged along a direction perpendicular to a thickness direction of the cell (200).

14. The battery pack (1000) according to claim 1, wherein the through-hole (16) is located at a central position of the basic element (10); or
wherein a length of the surface (12) is equal to a linear length of the curved surface (14).

15. The battery pack (1000) according to claim 2 or 5, wherein the surfaces (12) of the basic elements (10) located at opposite ends of the buffer component (100) are configured to abut against the cells (200).
